# EUROPEAN PATENT APPLICATION

(11) **EP 4 485 236 A1**
(43) Date of publication of application: **01.01.2025**
(21) Application number: 23182533.2
(22) Date of filing: 29.06.2023
(51) Int. Cl.: G06F 21/10, G06Q 30/06

(54) **METHOD AND SYSTEM FOR ADAPTIVE LICENSING BASED ON REAL-TIME USAGE DATA**

(71) Applicant: THALES DIS CPL USA, INC., Austin, TX 78759 (US)
(72) Inventor: KAKKIRALA, Lakshmana Mani Pavan, 500015 Secunderabad (IN); GARG, Abhinav, 281004 Uttar Pradesh (IN)
(74) Representative: Lotaut, Yacine Diaw

(57) **Abstract**

A system and method for an adaptive license is provided. The system includes a license usage collection module 120 to collect 204 real-time usage data and user interaction of licensed software 107, a license analyzer module 130 for analyzing 206 and identifying 208 patterns and trends of licensed features from the real-time usage data and user interaction, and a license adjustment module 140 to adjust 210 the terms and conditions of the license 101, thereby providing 214 a flexible and responsive licensing approach. In another arrangement it receives predetermined options for configuring an automatic adaptability of a license model. In some embodiments it notifies and prompts a user of the licensed software for acceptance or denial of license terms according to said real-time usage data and user interactions. Other embodiments disclosed.

## Description

### TECHNICAL FIELD

The present disclosure generally relates to software licensing and control over license use. More particularly, but not exclusively, the present disclosure relates to a method of adaptive licensing based upon real-time usage data.

### BACKGROUND

Software licensing is a process through which an Independent Software Vendor (ISV) and/or Identity Verification (IDV) offers their software application product or embedded device firmware to an individual or business for a fee. It is a means by which end-users gain access to software and products, while the ownership rights remain with the software publisher. End-users must generally accept some form of a software licensing agreement in order to use the software. Numerous types of software licensing models are available to unlock software for users, varying from simple perpetual licenses and subscription licenses to more advanced models such as floating licensing.

The majority of software vendors are moving towards a cloud based subscription model for licensing purposes. In this realm, various types of software licensing models are available: perpetual, concurrent, subscription-based, proprietary, feature-based, network-based, cloud-based and so on. Traditional licensing models are typically based on fixed terms and conditions, and do not consider the actual usage patterns or customer data. One example of a fixed term license is one that allows the user to use the software for a fixed period of time. Any change requires an update request, which must be processed, and then reviewed, usually internally, then approved and produced for deployment of a fixed license update. These steps occur independently and not in real-time while a user is in the process of using a licensed application. Moreover, long deployment cycles with fixed terms and corresponding payment intervals can introduce other issues and restrictions that disrupt delivery of new functionality in the short term

Furthermore, some users may be unaware of all the available software features, or which features are even available, or which features they are currently using, and thus not benefit from a full use of the license. Consider, a licensed package whereby the user is only aware of two features, and is unaware of a third hidden features. Consequently, users may end up paying for features or services that they do not use, or may be limited in their ability to use certain features or services when they need them. As a result, users may end up paying for features or services that they do not use, or may be limited in their ability to use certain features or services when they need them. Accordingly, a traditional fixed license may be considered inflexible and inconvenient from the licensee and licensors perspective.

Although traditional licensing helps Independent Service Vendors (ISV's) or Identify Vendors (IDV's) in compliance tracking and auditing, they generally fails to automatically control or restrict, when there is a deviation from compliance needs. This is also because licenses are generally fixed at the onset without further oversight or guidelines on using the license after deployment. From a licensee's perspective, the typical existing strategies fail to dynamically adapt for the actual software usage. Other systems may track usage for compliance, but similarly fail to adequately modify or adapt licenses considering several use case scenarios that will enable licensors to still monetize their software in a cloud computing environment with existing customers while still providing improved customer satisfaction with advantages over traditional licensing.

US Patent No. 9246916 issued on Jan 26, 2016 is directed to an architecture for enforcing rights in digital content that allows access to encrypted digital content only in accordance with parameters specified by license rights acquired by a user of the digital content. A point of novelty in this license approach is use of a license server that issues a license to a DRM system that is 'trusted', and is equipped with a 'black box' that performs decryption and encryption functions for such DRM system. The license is stored in the DRM system thereby allowing the user to render the digital content according to the rights conferred by the license and specified in the license terms.

US Patent No. 4937863 issued on June 26, 1990 to assignee Digital Equipment Corporation entitled "Software Licensing Management System" discloses a license management system which includes a license management facility that determines whether usage of a licensed program is within the scope of the license. The license management system maintains a license unit value for each licensed program and a pointer to a table identifying an allocation unit value associated with each use of the licensed program. In response to a request to use a licensed program, the license management system responds with an indication as to whether the license unit value exceeds the allocation unit value associated with the use. Upon receiving the response, the operation of the licensed program depends upon policies established by the licensor. Such system is static in many ways and not sufficiently adaptive for today's cloud computing environments.

US Patent No. 9,569,598 issued on February 14, 2017 to assignee Kyndryl Inc. entitled "Software license management in a networked computing environment" discloses an approach for managing licenses for software installations on virtual machine (VM) instances in a networked computing environment (e.g., a cloud computing environment) is provided. Specifically, in one example, data (e.g., real-time and/or historical) pertaining to usage of a set of software installations on a set of (VM) instances in the networked computing environment is collected. When a request is received (e.g., from a requester) for a license for a particular software installation of the set of software installations, it is determined whether the license is available. If not, it is then determined whether the license is obtainable based on the collected data and a current configuration of the networked computing environment. Then, responsive to the license being obtainable, the requested license may be allocated. Again, such a system is static in many respect and not sufficiently adaptive for today's cloud computing environments.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a system for adaptive licensing is provided and comprises: a license design module to receive predetermined options for configuring an automatic adaptability of a license model for terms and conditions of a license; a license usage collection module coupled to the license design module, to collect real-time usage data and user interaction of licensed software at a licensee client device under the license according to said license model; a license analyzer module coupled to the license usage collection module for analyzing the real-time usage data and user interaction, and therefrom identifying patterns and trends of licensed features of the licensed software under the license according to said license model; a license adjustment module coupled to the analyzer module that, responsive to identification of said patterns and trends, adjusts the terms and conditions of the license according to configuring of said automatic adaptability. The analyzer module in conjunction with said license adjustment module automatically adapts the license terms and conditions to establish usage of said licensed features and provide a cost effective and robustly monetizable license under the predetermined options of the license model, thereby providing a flexible and responsive licensing approach to a licensee of the licensed software with via a pre-set and configurable adaptive licensing module.

In some embodiments, the license usage collection module obtains usage data from various sources, including user interactions with the software, system logs, license usage data and telemetry data of the licensee client device. In some embodiments, the analyzer module identifies customer use and purchase behaviors associated with a use of the licensed features and corresponding usage data in view of said patterns and trends. In some embodiments, the analyzer module adjusts license terms, including adding or removing features, increasing or decreasing usage limits, or changing pricing models, in view of opportunities identified in said patterns and trends.

In some embodiments, the license usage collection module obtains usage data from various sources, including user interactions with the software, system logs, license usage data and telemetry data of the licensee client device. It may also notify and prompt a user of the licensed software for acceptance or denial of license terms deemed applicable to said real-time usage data and user interactions. Terms that are applicable, and/or deemed to apply can occur, for example, when a user invokes a new software feature, downloads a new software functionality, or favorably or negatively responds to a new software offer or feature offer or utility, or other interaction that the device observes or acknowledges from usage data or user interface functions.

In some embodiments, the analyzer module and license adjustment module continue to monitor usage patterns and adjust license terms to optimize licensing costs and ensure that users have access to the features and services they need. In some embodiments, the license adjustment module changes a license duration based on how frequently the software is being used or how long the customer has been using it.

In some embodiments, the license adjustment module changes license scope to allow and restrict certain features or functionality of the licensed software based on how the customer is using it. In some embodiments, the license adjustment module changes a price of the license based on how often the software is being used, the number of users, and the features being used. In some embodiments, the license adjustment module changes a level of customer support based on how often the software is being used and the level of support needed based on the number of issues encountered.

In some embodiments, a method of adaptive licensing is provided comprising: receiving predetermined options for configuring an automatic adaptability of a license model for terms and conditions of a license by way of a license design module; collecting real-time usage data and user interaction of licensed software at a licensee client device under the license according to said license model by way of a license usage collection module coupled to the license design module; analyzing the real-time usage data and user interaction, and therefrom identifying patterns and trends of licensed features of the licensed software under the license according to said license model by way of an analyzer module coupled to the license usage collection module; and adjusting the terms and conditions of the license according to configuring of said automatic adaptability by way of a license adjustment module coupled to the analyzer module device responsive to identification of said patterns and trends. The method automatically adapts the license terms and conditions to establish usage of said licensed features and provide a cost effective and robustly monetizable license under the predetermined options of the license model, and providing a flexible and responsive licensing approach to a licensee of the licensed software with via a pre-set and configurable adaptive licensing module.

In some embodiments, the step of collecting real-time usage data and user interaction of licensed software comprises obtaining usage data from various sources, including user interactions with the software, system logs, license usage data and telemetry data of the licensee client device. In some embodiments, the method includes identifying customer use and purchase behaviors associated with a use of the licensed features and corresponding usage data in view of said patterns and trends; adjusting license terms, including adding or removing features, increasing or decreasing usage limits, or changing pricing models, in view of opportunities identified in said patterns and trends; and continually monitoring usage patterns and adjust license terms to optimize licensing costs and ensure that users have access to the features and services they need.

In some embodiments, the method includes limiting a number of concurrent users based on usage data and adjusting license fees according to a number of multiple devices using the licensed software, and adjusting license renewal terms based on licensee's usage behavior and history, including offering discounts for loyalty to customers who have been using the software frequently or automatically renewing or extending the license. In some embodiments, the method includes performing an analysis or audit usage based on adherence to one or more predetermined usage policy options under the license, and modify the license based on the analyzing or auditing of usage to provide the licensee with a modified license in accordance with the one or more predetermined usage policy options that are active, wherein the usage policy options reference or include parameters pre-set in a configuration stage and associated with software application features.

### BRIEF DESCRIPTION OF THE DRAWINGS

Non-limiting and non-exhaustive embodiments are described with reference to the following drawings, wherein like labels refer to like parts throughout the various views unless otherwise specified. The sizes and relative positions of elements in the drawings are not necessarily drawn to scale. For example, the shapes of various elements are selected, enlarged, and positioned to improve drawing legibility. The particular shapes of the elements as drawn have been selected for ease of recognition in the drawings. One or more embodiments are described hereinafter with reference to the accompanying drawings in which:
**FIG. 1** illustrates a system for adaptive licensing based on real-time-usage data in accordance with some embodiments;
**FIG. 2** illustrates a method for adaptive licensing based on real-time-usage data in accordance with some embodiments;
**FIG. 3** illustrates an example of a computing system in accordance with some embodiments;
**FIG. 4** illustrates an example of a storage medium in accordance with some embodiments; and
**FIG. 5** illustrates an example of a computing platform in accordance with some embodiments.

### DETAILED DESCRIPTION

In the following description, certain specific details are set forth in order to provide a thorough understanding of various disclosed embodiments. However, one skilled in the relevant art will recognize that embodiments may be practiced without one or more of these specific details, or with other methods, components, materials, etc. Also in these instances, well-known structures may be omitted or shown and described in reduced detail to avoid unnecessarily obscuring descriptions of the embodiments.

Herein provided is an adaptive license model that resolves the aforementioned problems to provide a more flexible and responsive licensing approach than traditional licensing models, and does so by leveraging real-time usage data to dynamically adjust license terms. More specifically, the technical embodiments discussed ahead provide a system and method of adaptive licensing to adaptively modify a license, based on configured options, and dynamically adjust license terms therein, in view of software feature and data usage based on tracked license usage information that can be automatically and continuously collected, monitored and optimized.

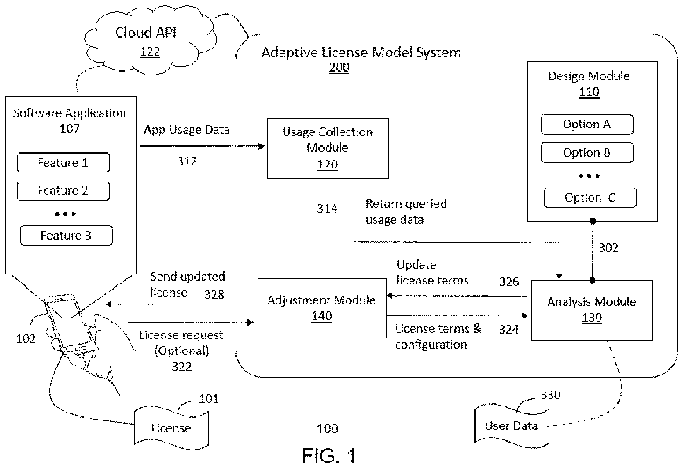

Referring to **FIG. 1****,** a system **100** for adaptive licensing is shown in accordance with one embodiment. The system **100** includes a license design module **110,** a license usage collection module **120,** a license analyzer module **130,** and a license adjustment module **140.** In practice there may be one or a plurality of the modules with more interconnections than those shown. In some arrangements, all the modules may reside together in a cloud component, for example, providing cloud license manager services via a service provider, or in other arrangements, may be distributed across clouds over components supported by multiple service providers. In some arrangements an Identify Verification manager may be included for verifying user identities and authorizing user access to resources.

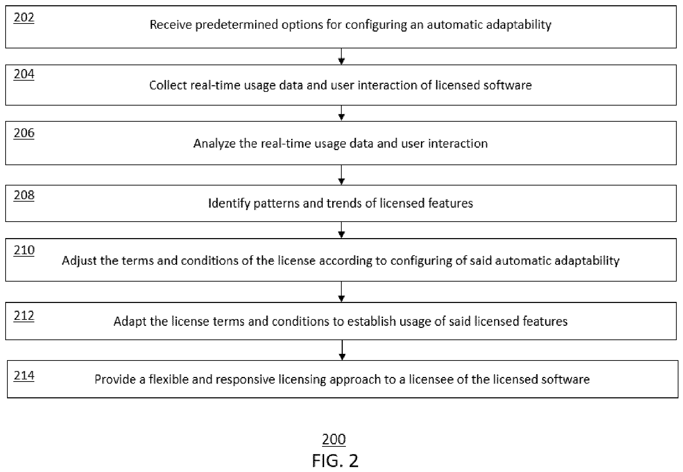

In the foregoing discussion of the components of system **100** of **FIG. 1****,** reference will be made also to **FIG. 2****,** which shows corresponding method steps **202-214** for adaptive licensing. Briefly, the adaptive licensing model approach may include more or less than the number of steps shown in **FIG. 2****,** and is not limited to only these steps. The steps of the method **200** may be practiced by the components shown in system **100** of **FIG1** as described next, though other embodiments are contemplated.

Continuing with **FIG. 1****,** license design module **110** receives as input configuration settings, for example, from a license administrator or other management source to establish or identify parameters of an adaptive license model. For instance, it receives **202** predetermined options (e.g. A, B and C) for *configuring* an automatic adaptability of a license model for terms and conditions of a license **101.** The license model is a combination of various parameters that define within the scope of a designed license how software can be used by a customer. This design module maps different license attributes into logical groups, which define how a protected application is to be deployed and used under a license.

On this point, one novel embodiment is this initial design stage for intentionally generating a license model lifecycle with preset entries for *configuring* an automatic adaptability of a license with terms and conditions. That is, the *configuring* provides for later automatic adaptation to within the range of predetermined and preset options. Consider for example, license design parameters, each with preset ranges and trigger points, for adapting the license in real-time based on usage as it occurs. With this invention, for example, a license owner can design into the license model certain parameters with bounds (e.g., upper and lower limits) for how the license should adapt, for instance, with respect to usage, features, applications and add-ons, including, times, durations, conditions, scope, fees, ads, and so on.

Continuing, the license usage collection module **120** is coupled to the license design module **110,** and collects **204** real-time usage data and user interaction. It collects real-time usage data, for example, interaction with the licensed software (application) **107** at a licensee client device **102** (e.g., mobile phone, laptop, console, etc.) under the license **101** according to the license model. In one embodiment, the usage collection module **120** implements and uses a webSocket is to fetch realtime usage data and realtime license delivery. It collects usage data from various sources, such as user interactions with the software, system logs, license usage data and other telemetry data (e.g. network traffic, device information, user activity, location info, neighbor cells, idle time, security, performance, bandwidth, etc.), and does so in real-time. As an example, it can determine which application functions (e.g., via features 1, 2 and 3) the user interacts with, along with relevant usage data for that feature, such as, how often the feature is used, for how long and where.

The license analyzer module **130** is coupled to the license usage collection module 120 for analyzing **206** the real-time usage data and user interaction, and therefrom, identifying **208** patterns and trends of licensed features of the licensed software (application) **110** under the license according to the license model. The analysis helps identify opportunities to adjust license terms, such as adding or removing features, increasing or decreasing usage limits, or changing pricing models. Analysis can also include customer behavior, purchases and old usage data. As an example, the license analyzer module **130** may quantify the extent of the interaction and log the activity (e.g., user selected feature 1 at hh:mm:ss on mm/dd/yy for xx seconds) associated with a corresponding feature (e.g., camera, phone app, GPS, etc.).

The license adjustment module **140** is coupled to the analyzer module 130 that, in response to identification of the patterns and trends, adjusts **210** the terms and conditions of the license **101** according to the configuring of automatic adaptability. Recall, the predetermined options (e.g., Option A, B and C) of the adaptable license model (whereby a licensed use of the features will be adapted according to predetermined options and presets for real-time use) are associated with application utilities (e.g. Feature 1, 2 and 3) and license terms that are configurable (before, during or after license deployment) along with triggers to invoke (restrict, limit or grant) use of application feature based on real-time data and usage factors analyzed during application run-time. Thus, during application run-time, the adaptive license model system automatically adjusts license terms and pushes them through to the application, and similarly, pulls usage information and reports activity of a licensed application on a licensed device to an ISF or software publisher. That is, based on the usage data analysis and configuration of adaptability terms during initial license design stage by ISV, the license adjustment module **140** automatically adjusts license terms and conditions for individual users or organizations. These adjustments are made in real-time and require no or optional manual intervention.

The analyzer module **130** in conjunction with the license adjustment module **140** automatically adapts **212** the license **101** terms and conditions to establish usage of said licensed features and provide a cost effective and robustly monetizable license under the predetermined options of the license model. The system **100,** continues to monitor usage patterns and adjust license terms as needed to optimize licensing costs and ensure that users have access to the features and services they need. In some arrangements, an optional manual intervention may occur through a notification system, where the customer is notified about updated license terms. In these cases, the customer may be prompted to accept new license terms that will be applied immediately, or at a scheduled time. If the customer accepts new license terms it will be applied, else it will continue with old license terms, or the software will be disabled. For instance, the customer may be prompted to continue with old license terms without any change, or with notification that certain features, or the software all together, will be disabled.

The system **100** of **FIG. 1****,** and corresponding method **200** of **FIG. 2****,** provide a flexible and responsive licensing approach to a licensee of the licensed software with via a pre-set and configurable adaptive licensing module. In this pre-configurable adaptive license model, from the user's perspective, the application adapts its licensable features according to the user's usage of the application in real-time and evolves upon analysis of customer data and usage is analyzed. Similarly, from the licensor or the ISV's perspective, the system **100** and method **200** provide the software publishers with control and visibility into how their applications are deployed and used. Enforcement of licensing terms and conditions provides vendors software protection from unauthorized use or distribution of their products.

As an example, arrows **302-330** between modules of the system **100** of **FIG. 1** show one practical embodiment of how the modules interact together to modify a license, though others interactions are contemplated. This is merely one example. For instance, after admin entry and configuration of the options (e.g. A, B and C) for the design of the adaptive license model, the analysis module **130** at step **302** is provided these settings, or alternatively, can pull these settings from the design module **110.** Thereafter when the user on their device **102** engages with the application (including licensed software) **107,** the usage collection module **120** collects use information as shown in step **312,** which includes access to software features that may be available, or already granted, for licensed use. The analysis module **130** receives the returned queried usage data at step **314** and compares it to the predetermined options received from the design module **110** to decide whether to update/modify/terminate the license and/or otherwise how to respond to the user's action. Although not shown, the analysis module 130 may also reference a license policy associated with the options configured by the design module 110.

As one example, if the feature is available for license, and within a preset range of the configured options, the analysis module **130** will automatically update the license terms of the license at step **326,** followed by the adjustment module **140** sending an updated license at step **328.** Alternatively, or in conjunction with the user action, the user or device **102,** may send a license request at step **322** to the adjustment module **140** specifically requesting a license update. This could occur in response to the user becoming aware of a desired software feature either on their own, through a message, a notification, or software update, or so on, separate from a user action using the software. This request may also contain additional license terms and conditions, or modified terms and conditions the user makes for condition to accept (such as an offer) the license. Accordingly, the adjustment module **140** then sends these license terms and conditons at step **324** to the analysis module **130,** which similarly compares to the range of preconfigured options designed into the adapative license model **110.** Again, the license model design may be a manual action by an admin issuing a license for example, or an automatic update to the options responsive to a preconfigured event (e.g. date, deadline, limited offer, advertisement, etc.) or other option.

In some embodiments, the system **100** can further include a licensing application programming interface (API) **122** on a client-side. The API **122** can access the license locally (on the client device **102** side) or online from a cloud license manager service. The API **122** can have a set that includes APIs such as login, encryption, decryption, read, write, and/or logout. The API **122** can also provide a credentialing or identity function enabling access to a public cloud license manager where each client would be assigned with a unique credential that can be an API key. Any license detach can be handled by a login API internally (to the API), and can be further controlled by the cloud license manager service. A licensed application can reside on the client-side within a local storage at a local license manager service (**102**). The licensed application can integrate with a licensing API to check for a valid license either used locally or as a cloud license. If a license is not available or expired, then the licensed application will be forced to exit. The system **100** for adaptive license modification will enable the cloud license manager service to decide when and how to perform a license modification in accordance with the embodiments discussed herein.

In yet another embodiment, a computer program product includes a non-transitory computer-readable storage medium containing computer program code, the computer program code when executed by one or more processors causes the one or more processors to perform operations similar to the method described above and with respect to **FIG. 2****.** The computer program code can include instructions to deliver, enable or modify a license and software for a licensee under the license at a licensee client device or a plurality of licensee client devices. For example, in one embodiment, a webSocket is implemented and used to fetch realtime usage data and provide for realtime license delivery.

In another arrangement, the analyzer module **130** can perform an analysis or audit usage based on adherence to one or more predetermined usage policy options under the license, and modify the license under the one or more predetermined policy options based on the analyzing or auditing of usage to provide the licensee with a modified license in accordance with the one or more predetermined usage policy options that are active. Such a policy may reference or include the parameters to be pre-set in the configuration stage (e.g., Option A, B and C) and associated software application uses (e.g., Feature 1, 2 and 3) shown in **FIG. 1** .

In some embodments, the system **100** and method **200** provide and control license duration changes based on how frequently the software is being used or how long the customer has been using it. In some embodments, the system 100 and method 200 provide and control license scope changes to allow or restrict certain features or functionality of the software based on how the customer is using it. This allows the customer to access additional features or services based on their usage patterns and behavior or if a customer is using a particular feature of the product or service more than others. The license terms are modified to provide greater access to that feature.

In some embodments, the system **100** and method **200** change and control license renewal terms based on the customer's usage behavior and history, such as offering discounts for loyal customers or customers who have been using the software frequently or Automatically renewing or extending the license based on the customer's usage patterns and behavior. The license termination terms can be similarly changed based on the customer's usage behavior, such as terminating the license if the customer violates certain usage policies or uses the software in an unauthorized manner.

In some embodments, the system **100** and method **200** provide and control the number of users who can access the software based on the usage data. For example, if a customer is adding more users than anticipated, the license terms are modified to allow for a higher number of users. The price of the license can also be changed based on how often the software is being used, the number of users, and the features being used. For example, if a customer is using the licensed product or service more frequently than anticipated, the license price can be increased to reflect the increased usage.

In some embodments, the system **100** and method **200** change and control a level of support provided with the license based on how often the software is being used and the level of support needed based on the number of issues encountered. This includes usage restriction changes, such as the number of concurrent users, can be changed based on the usage data. Depending on the number of devices being used to access the licensed software or service, components of the system **100** can change the license fee. For example, if a user is accessing a software on multiple devices, the license fee can be increased as per the usage data.

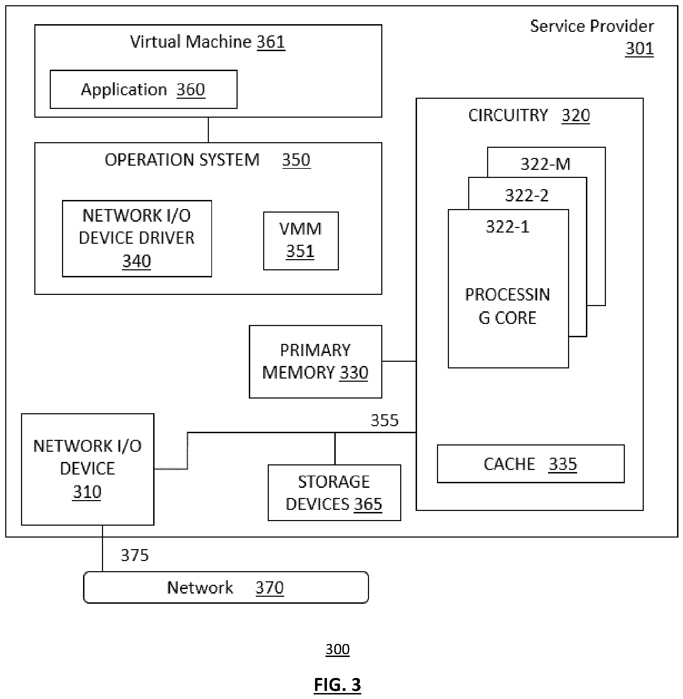

In some embodiments the system **200** for adaptive license modeling is provided by way of a service provider or other platform provider or cloud computation platform. The entire system or certain components thereof may run on a cloud-based infrastructure, for example: Software as a Service (SaaS), Platform as a Service (PaaS), or Infrastructure as a Service (IaaS). The components shown in **FIG 1** may each be a computing platform (see **FIGS 3-5**) including one or more hardware processors and hardware memory coupled to the one or more processors, wherein the memory (also storage medium) includes computer instructions and data which when executed by the one or more processors causes them to perform the method steps or other operations disclosed (e.g. method **200** of **FIG. 2** or steps **302-330** in **FIG. 1**)**.** They may be connected over the network to other machines via a network communication device interface. In a networked deployment, they may operate in the capacity of a standalone mobile device, a client user machine in server-client user network environment, or as a peer machine in a peer-to-peer, or distributed, network environment. Computing platforms and/or components disclosed herein with hardware processors may include, but are not limited, to the client device **102,** the license design module **110,** the license usage collection module **120,** the license analyzer module **130,** the license adjustment module **140.**

The adaptive license model shown in **FIG. 1** is based on real-time usage data and offers several advantages over traditional licensing models; namely, flexibility, better compliance, additional insights, improved customer satisfaction, increased revenue potential, and cost savings. The adaptive license model provides a more flexible licensing approach that can adapt to the changing needs of users and organizations over time. Real time usage data helps to monitor compliance/regulatory guidelines and trigger necessary changes to adaptive license model in controlling the application/device usage. And, more insights can be drawing for future decisions based on real-time license model changes and usage behavior. Together with these benefits, the adaptive license model helps improve customer satisfaction by providing a licensing approach that aligns with their actual software usage patterns and needs. It helps identify opportunities to upsell or cross-sell additional features or services based on usage patterns, increasing revenue potential for software vendors. And, users and organizations would only pay for the features and services they actually use, resulting in significant cost savings compared to traditional licensing models. The adaptive license model provides a competitive advantage over software vendors that offer traditional licensing models, particularly in industries where software usage patterns can vary widely among users and organizations.

**FIG. 3** shows a service provider **301** that includes circuitry **320,** primary memory **330,** operating system (OS) **350,** Network (NW) I/O device driver **340**, virtual machine manager (VMM) (also known as a hypervisor) **351,** at least one application **360** running in a virtual machine (VM) **361,** and one or more storage devices **365.** In one embodiment, OS **350** is Linux^{™}. In another embodiment, OS **350** is Windows^{®} Server. Other OSs may also be used. In an embodiment, application **360** comprises one or more of a cloud license manager service having one or more smart license automatic detach policies. Network I/O device driver **340** operates to initialize and manage I/O requests performed by network I/O device **310.** In an embodiment, packets and/or packet metadata transmitted to network I/O device **310** and/or received from network I/O device **310** are stored in one or more of primary memory **330** and/or storage devices **365.**

In at least one embodiment, storage devices **365** may be one or more of hard disk drives (HDDs) and/or solid-state drives (SSDs). In an embodiment, storage devices **365** may be non-volatile memories (NVMs). In some examples, as shown in **FIG. 3****,** circuitry **320** may communicatively couple to network I/O device **310** via communications link **355.** In one embodiment, communications link **355** is a peripheral component interface express (PCIe) bus conforming to version 3.0 or other versions of the PCIe standard published by the PCI Special Interest Group (PCI-SIG).

In some examples, operating system **350,** network I/O device driver **340,** VM **361,** and application **360** are implemented, at least in part, via cooperation between one or more memory devices included in primary memory **330** (e.g., volatile or non-volatile memory devices), storage devices **365,** and elements of circuitry **320** such as processing cores **322-1** to **322-***m*, where "m" is any positive whole integer greater than 2. In an embodiment, OS **350,** VMM **351,** network I/O device driver **340,** VM **361** and application **360** are executed by one or more processing cores **322-1** to **322**-*m*.

In some examples, service provider **301,** includes but is not limited to a server, a server array or server farm, a web server, a network server, an Internet server, a work station, a mini-computer, a main frame computer, a supercomputer, a network appliance, a web appliance, a distributed computing system, multiprocessor systems, processor-based systems, a laptop computer, a tablet computer, a smartphone, a system-on-a-chip (SoC), or a combination thereof. In one example, service provider **301** is a disaggregated server. A disaggregated server is a server that breaks up components and resources into subsystems (e.g., network sleds). Disaggregated servers can be adapted to changing storage or compute loads as needed without replacing or disrupting an entire server for an extended period of time. A server could, for example, be broken into modular compute, I/O, power and storage modules that can be shared among other nearby servers.

Circuitry **320** having processing cores **322-1** to **322**-*m* may include various commercially available processors, including without limitation Intel^{®} Atom^{®}, Celeron^{®}, Core (2) Duo^{®}, Core i3, Core i5, Core i7, Itanium^{®}, Pentium^{®}, Xeon^{®} or Xeon Phi^{®} processors, ARM processors, and similar processors. Circuitry **320** may include at least one cache **335** to store data.

According to some examples, primary memory **330** may be composed of one or more memory devices or dies which may include various types of volatile and/or non-volatile memory. Volatile types of memory may include, but are not limited to, dynamic random-access memory (DRAM), static random-access memory (SRAM), thyristor RAM (TRAM) or zero-capacitor RAM (ZRAIVI). Non-volatile types of memory may include byte or block addressable types of non-volatile memory having a 3-dimensional (3-D) cross-point memory structure that includes chalcogenide phase change material (e.g., chalcogenide glass) hereinafter referred to as "3-D cross-point memory". Non-volatile types of memory may also include other types of byte or block addressable non-volatile memory such as, but not limited to, multi-threshold level NAND flash memory, NOR flash memory, single or multi-level phase change memory (PCM), resistive memory, nanowire memory, ferroelectric transistor random access memory (FeTRAM), magneto-resistive random-access memory (MRAM) that incorporates memristor technology, spin transfer torque MRAM (STT-MRAM), or a combination of any of the above. In another embodiment, primary memory **330** may include one or more hard disk drives within and/or accessible by service provider **301.**

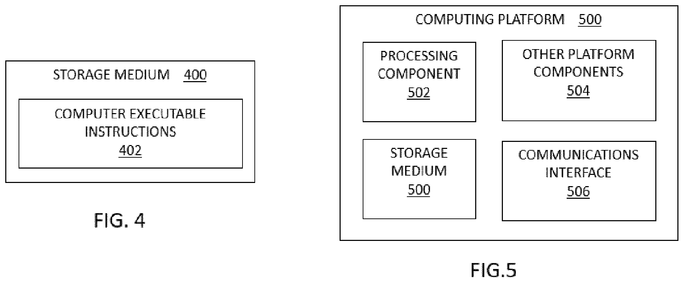

**FIG. 4** illustrates an example of a storage medium **400.** Storage medium **400** may comprise an article of manufacture. In some examples, storage medium **400** may include any non-transitory computer readable medium or machine readable medium, such as an optical, magnetic or semiconductor storage. Storage medium **400** may store various types of computer executable instructions, such as instructions **402** to implement method steps and logic flows described in the above figures. Examples of a computer readable or machine-readable storage medium may include any tangible media capable of storing electronic data, including volatile memory or non-volatile memory, removable or non-removable memory, erasable or non-erasable memory, writeable or re-writeable memory, and so forth. Examples of computer executable instructions may include any suitable type of code, such as source code, compiled code, interpreted code, executable code, static code, dynamic code, object-oriented code, visual code, and the like. The examples are not limited in this context.

**FIG. 5** illustrates an example computing platform **500.** In some examples, computing platform **500** may include a processing component **502,** other platform components **504** and/or a communications interface **506.** According to some examples, processing component **502** may execute processing operations or logic for instructions stored on storage medium **400.** Processing component **502** may include various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, device drivers, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given example.

In some examples, other platform components **504** may include common computing elements, such as one or more processors, multi-core processors, co-processors, memory units, chipsets, controllers, peripherals, interfaces, oscillators, timing devices, video cards, audio cards, multimedia input/output (I/O) components (e.g., digital displays), power supplies, and so forth. Examples of memory units may include without limitation various types of computer readable and machine readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), types of non-volatile memory such as 3-D cross-point memory that may be byte or block addressable. Non-volatile types of memory may also include other types of byte or block addressable non-volatile memory such as, but not limited to, multi-threshold level NAND flash memory, NOR flash memory, single or multi-level PCM, resistive memory, nanowire memory, FeTRAM, MRAM that incorporates memristor technology, STT-MRAM, or a combination of any of the above. Other types of computer readable and machine-readable storage media may also include magnetic or optical cards, an array of devices such as Redundant Array of Independent Disks (RAID) drives, solid state memory devices (e.g., USB memory), solid state drives (SSD) and any other type of storage media suitable for storing information.

In some examples, communications interface **506** may include logic and/or features to support a communication interface. For these examples, communications interface **506** may include one or more communication interfaces that operate according to various communication protocols or standards to communicate over direct or network communication links or channels. Direct communications may occur via use of communication protocols or standards described in one or more industry standards (including progenies and variants) such as those associated with the peripheral component interconnect express (PCIe) specification. Network communications may occur via use of communication protocols or standards such those described in one or more Ethernet standards promulgated by the Institute of Electrical and Electronics Engineers (IEEE). For example, one such Ethernet standard may include IEEE 802.3. Network communication may also occur according to one or more OpenFlow specifications such as the OpenFlow Switch Specification.

The components and features of computing platform **500,** including logic represented by the instructions stored on storage medium **400** may be implemented using any combination of discrete circuitry, ASICs, logic gates and/or single chip architectures. Further, the features of computing platform **700** may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It should be appreciated that the exemplary computing platform **500** shown in the block diagram of **FIG. 5** may represent one functionally descriptive example of many potential implementations. Accordingly, division, omission or inclusion of block functions depicted in the accompanying figures does not infer that the hardware components, circuits, software and/or elements for implementing these functions would necessarily be divided, omitted, or included in embodiments.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASIC, programmable logic devices (PLD), digital signal processors (DSP), FPGA, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

Some examples may include an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

Some examples may be described using the expression "in one example" or "an example" along with their derivatives. These terms mean that a particular feature, structure, or characteristic described in connection with the example is included in at least one example. The appearances of the phrase "in one example" in various places in the specification are not necessarily all referring to the same example.

Included herein are logic flows or schemes representative of example methodologies for performing novel aspects of the disclosed architecture. While, for purposes of simplicity of explanation, the one or more methodologies shown herein are shown and described as a series of acts, those skilled in the art will understand and appreciate that the methodologies are not limited by the order of acts. Some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be required for a novel implementation.

A logic flow or scheme may be implemented in software, firmware, and/or hardware. In software and firmware embodiments, a logic flow or scheme may be implemented by computer executable instructions stored on at least one non-transitory computer readable medium or machine readable medium, such as an optical, magnetic or semiconductor storage. The embodiments are not limited in this context.

Some examples are described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

It is emphasized that the Abstract of the Disclosure is provided to comply with 37 C.F.R. Section 1.72(b), requiring an abstract that will allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single example for the purpose of streamlining the disclosure. This method of disclosure is not to be interpreted as reflecting an intention that the claimed examples require more features than are expressly recited in each claim. Rather, as the following claims reflect, inventive subject matter lies in less than all features of a single disclosed example. Thus, the following claims are hereby incorporated into the Detailed Description, with each claim standing on its own as a separate example.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

In the absence of any specific clarification related to its express use in a particular context, where the terms " substantial " or " about " or "usually" in any grammatical form are used as modifiers in the present disclosure and any appended claims ( e.g., to modify a structure, a dimension, a measurement, or some other characteristic), it is understood that the characteristic may vary by up to 30 percent.

The terms "include" and "comprise" as well as derivatives thereof, in all of their syntactic contexts, are to be construed without limitation in an open, inclusive sense, ( e.g. , " including, but not limited to " ). The term "or," is inclusive, meaning and / or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like.

Unless the context requires otherwise, throughout the specification and claims which follow, the word "comprise" and variations thereof, such as, "comprises" and "comprising," are to be construed in an open, inclusive sense, e.g., "including, but not limited to."

Reference throughout this specification to "one embodiment" or "an embodiment" or "some embodiments" and variations thereof mean that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or idea.

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

As the context may require in this disclosure, except as the context may dictate otherwise, the singular shall mean the plural and vice versa. All pronouns shall mean and include the person, entity, firm or corporation to which they relate. Also, the masculine shall mean the feminine and vice versa.

When so arranged as described herein, each computing device or processor may be transformed from a generic and unspecific computing device or processor to a combination device comprising hardware and software configured for a specific and particular purpose providing more than conventional functions and solving a particular technical problem with a particular technical solution. When so arranged as described herein, to the extent that any of the inventive concepts described herein are found by a body of competent adjudication to be subsumed in an abstract idea, the ordered combination of elements and limitations are expressly presented to provide a requisite inventive concept by transforming the abstract idea into a tangible and concrete practical application of that abstract idea.

The headings and Abstract of the Disclosure provided herein are for convenience only and do not limit or interpret the scope or meaning of the embodiments. The various embodiments described above can be combined to provide further embodiments. Aspects of the embodiments can be modified, if necessary to employ concepts of the various patents, application and publications to provide further embodiments.

## Claims

**1.** A system 200 of adaptive licensing, comprising:
a license design module 110 to receive 202 predetermined options for configuring an automatic adaptability of a license model for terms and conditions of a license 101;
a license usage collection module 120 coupled to the license design module 110, to collect 204 real-time usage data and user interaction of licensed software 107 at a licensee client device 102 under the license 101 according to said license model;
a license analyzer module 130 coupled to the license usage collection module 120 for analyzing 206 the real-time usage data and user interaction, and therefrom identifying 208 patterns and trends of licensed features of the licensed software 107 under the license according to said license model; and
a license adjustment module 140 coupled to the analyzer module 130 that, responsive to identification of said patterns and trends, adjusts 210 the terms and conditions of the license 101,
wherein the step of collecting real-time usage data and user interaction of licensed software comprises obtaining usage data from various sources, including user interactions with the software, system logs, license usage data and telemetry data of the licensee client device,
whereby said analyzer module 130 in conjunction with said license adjustment module 140 automatically adapts 212 the license 101 terms and conditions to establish usage of said licensed features and provide a cost effective and robustly monetizable license responsive to said collecting real-time usage data and user interaction.

**2.** The system of claim 1, further comprising
a license design module 110 to receive 202 predetermined options for configuring an automatic adaptability of a license model for terms and conditions of a license 101,
wherein the license adjustment module 140 responsive to identification of said patterns and trends, adjusts 210 the terms and conditions of the license 101 according to said configuring of said automatic adaptability,
thereby providing 214 a flexible and responsive licensing approach to the licensee 101 of the licensed software 107 with via a pre-set and configurable adaptive licensing module.

**3.** The system of claim 1, wherein the license usage collection module
implements and uses a webSocket is to fetch said realtime usage data and provide realtime license delivery;
obtains usage data from various sources, including user interactions with the software, system logs, license usage data and telemetry data of the licensee client device; and
notifies and prompts a user of the licensed software for acceptance or denial of license terms deemed applicable to said real-time usage data and user interactions.

**4.** The system of claim 2, wherein the analyzer module
identifies customer use and purchase behaviors associated with a use of the licensed features and corresponding usage data in view of said patterns and trends; and
adjusts license terms, including adding or removing features, increasing or decreasing usage limits, or changing pricing models, in view of opportunities identified in said patterns and trends.

**5.** The system of claim 5, wherein the analyzer module and license adjustment module continue to monitor usage patterns and adjust license terms to optimize licensing costs and ensure that users have access to the features and services they need.

**6.** The system of claim 1, wherein the license adjustment module changes a license duration based on how frequently the software is being used or how long the customer has been using it.

**7.** The system of claim 1, wherein the license adjustment module changes license scope to allow and restrict certain features or functionality of the licensed software based on how the customer is using it.

**9.** The system of claim 2, wherein the license adjustment module changes a price of the license based on how often the software is being used, the number of users, and the features being used.

**10.** The system of claim 9, wherein the license adjustment module changes a level of customer support based on how often the software is being used and the level of support needed based on the number of issues encountered.

**11.** A method of adaptive licensing, comprising:
collecting 204 real-time usage data and user interaction of licensed software 107 at a licensee client device 102 under the license according to said license model by way of a license usage collection module 120 coupled to the license design module 110;
analyzing 206 the real-time usage data and user interactions, and therefrom identifying 208 patterns and trends of licensed features of the licensed software 107 under the license 101 according to said license model by way of an analyzer module 130 coupled to the license usage collection module 120; and
adjusting 210 the terms and conditions of the license 101 by way of a license adjustment module 140 coupled to the analyzer module 130 responsive to identification of said patterns and trends, and
notifying and prompting a notifies and prompts a user of the licensed software for acceptance or denial of license terms deemed applicable to said real-time usage data and user interactions,
wherein the step of collecting real-time usage data and user interaction of licensed software comprises obtaining usage data from various sources, including user interactions with the software, system logs, license usage data and telemetry data of the licensee client device,
thereby automatically adapting 212 the license terms and conditions to establish usage of said licensed features and provide a cost effective and robustly monetizable license responsive to said collecting real-time usage data and user interaction.

**12.** The method of claim 11, further comprising
receiving 202 predetermined options for configuring an automatic adaptability of a license model 107 for terms and conditions of a license 101 by way of a license design module 110,
wherein said adjusting 210 the terms and conditions of the license 101 according to said configuring of said automatic adaptability by way of a license adjustment module 140 under the predetermined options of the license model,
thereby providing 214 a flexible and responsive licensing approach to the licensee 101 of the licensed software 107 with via a pre-set and configurable adaptive licensing module.

**13.** The method of claim 12, further comprising
identifying customer use and purchase behaviors associated with a use of the licensed features and corresponding usage data in view of said patterns and trends
adjusting license terms, including adding or removing features, increasing or decreasing usage limits, or changing pricing models, in view of opportunities identified in said patterns and trends; and
continually monitoring usage patterns and adjust license terms to optimize licensing costs and ensure that users have access to the features and services they need.

**14.** The method of claim 12, further comprising limiting a number of concurrent users based on usage data and adjusting license fees according to a number of multiple devices using the licensed software, and adjusting license renewal terms based on licensee's usage behavior and history, including offering discounts for loyalty to customers who have been using the software frequently or automatically renewing or extending the license.

**15.** The method of claim 12, further comprising performing an analysis or audit usage based on adherence to one or more predetermined usage policy options under the license, and modify the license based on the analyzing or auditing of usage to provide the licensee with a modified license in accordance with the one or more predetermined usage policy options that are active, wherein the usage policy options reference or include parameters pre-set in a configuration stage and associated with software application features.
